(19) **Europäisches Patentamt**
**European Patent Office**
**Office européen des brevets**

(11) **EP 4 586 142 B1**

(12) **EUROPEAN PATENT SPECIFICATION**

(45) Date of publication and mention
of the grant of the patent:
**15.07.2026 Bulletin 2026/29**

(21) Application number: **24223595.0**

(22) Date of filing: **30.12.2024**

(51) International Patent Classification (IPC):
*H04L 9/08* (2006.01)    *G06N 3/045* (2023.01)
*G06N 3/08* (2023.01)    *G06N 5/01* (2023.01)
*G06N 7/01* (2023.01)    *G06N 20/00* (2019.01)
*G06N 20/10* (2019.01)    *G06N 3/084* (2023.01)

(52) Cooperative Patent Classification (CPC):
**G06N 3/045; G06N 3/08; G06N 3/084; G06N 5/01;
G06N 7/01; G06N 20/00; G06N 20/10;
H04L 9/0894;** H04L 2209/46

(54) **METHOD AND SYSTEM FOR A CROSS-SILO SERVERLESS COLLABORATIVE LEARNING IN A MALICIOUS CLIENT THREAT-MODEL**

VERFAHREN UND SYSTEM FÜR SERVERLOSES KOLLABORATIVES LERNEN ZWISCHEN SILENS IN EINEM BÖSARTIGEN CLIENT-BEDROHUNGSMODELL

PROCÉDÉ ET SYSTÈME POUR UN APPRENTISSAGE COLLABORATIF INTER-SILO SANS SERVEUR DANS UN MODÈLE DE MENACE DE CLIENT MALVEILLANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.01.2024 IN 202421002614**

(43) Date of publication of application:
**16.07.2025 Bulletin 2025/29**

(73) Proprietor: **Tata Consultancy Services Limited Maharashtra (IN)**

(72) Inventors:
• **ANTONY, DELTON MYALIL**
  **682002 Kochi (IN)**
• **ALASINGARA BHATTACHAR, RAJAN MINDIGAL**
  **560066 Bangalore (IN)**
• **SHAIK, IMTIYAZUDDIN**
  **500034 Hyderabad (IN)**
• **LODHA, SACHIN PREMSUKH**
  **411013 Pune (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **SONG ZHIHAO ET AL: "Dual-Model Active Federated Learning Based on Homomorphic Encryption", 2023 INTERNATIONAL CONFERENCE ON DATA SECURITY AND PRIVACY PROTECTION (DSPP), IEEE, 16 October 2023 (2023-10-16), pages 157 - 163, XP034529429, DOI: 10.1109/DSPP58763.2023.10404571**
• **SATTLER FELIX ET AL: "Clustered Federated Learning: Model-Agnostic Distributed Multitask Optimization Under Privacy Constraints", IEEE TRANSACTIONS ON NEURAL NETWORKS AND LEARNING SYSTEMS, IEEE, USA, vol. 32, no. 8, 24 August 2020 (2020-08-24), pages 3710 - 3722, XP011868628, ISSN: 2162-237X, [retrieved on 20210802], DOI: 10.1109/TNNLS.2020.3015958**
• **ANNA BOGDANOVA ET AL: "Federated Learning System without Model Sharing through Integration of Dimensional Reduced Data Representations", ARXIV.ORG, CORNELL UNIVERSITY LIBRARY, 201 OLIN LIBRARY CORNELL UNIVERSITY ITHACA, NY 14853, 13 November 2020 (2020-11-13), XP081813217**

EP 4 586 142 B1

**Description**

CROSS-REFERENCE TO RELATED APPLICATIONS AND PRIORITY

The present application claims priority to Indian application, Application No. 202421002614, filed in India on January 12, 2024.

TECHNICAL FIELD

The disclosure herein generally relates to a client management system, and, more particularly, to a method and system for a cross-silo serverless collaborative learning in a malicious client threat-model.

BACKGROUND

Traditional deep learning techniques are performed by using a high-performance system with direct access to the data to train large models. A client that uses such a system inevitably have to ship all its data to the system. The stakeholder can use their own data on their own model trained using their own high-performance system. Here, privacy of the stakeholder is never breached. As learning problems, and their solutions become more complex, the bottlenecks preventing the model from further improvements keep changing. The computer systems used in modeling were too underpowered to implement learning algorithms that were mathematically proven to converge. With the advent of GPUs, Cuda cores, and high-performance computing systems, now the computation bottleneck is starting to lift, only to be replaced by another i.e., a lack of large amounts of meaningful data. Data scarcity arises in learning, due to factors such as privacy concerns and legal regulations, proprietary ownership of datasets and sensitivity of the datasets involved. The possibility of a single stakeholder holding enough data required to train a model well beyond its current capability is limited. So, the basic solution to this problem would be training of a model from a collaboration of such similar stakeholders where they pool together their data in a central server, thus solving data scarcity. Unfortunately, in the real world, such a collaboration gives rise to privacy concerns, regulatory restrictions, and a wide variety of lawsuits since the collaborators will often have conflicting interests. Add to it a possibility of competing collaborators and the problem of data scarcity, despite an easy and straightforward solution, remains unsolved. A private learning problem has two major classes of components i.e., server(s) and clients. The threat assumption of both the server(s) and the clients constitutes the threat model of the problem.

To overcome these limitations to the solution for data scarcity, a wide variety of techniques have emerged under the area of private learning like Federated Learning (FL), Multiparty Computation (MPC), Trusted Execution Environment (TEE) based learning, Fully Homomorphic Encryption (FHE) based learning. Each of these techniques have their own advantages and disadvantages which are based on a three-way trade-off seen in private learning known as the privacy-performance-accuracy trade-off. For example, multiple banks want to collaboratively train a fraudulent transaction detection model from their private datasets. Regulatory restrictions and privacy concerns prevent the banks from exposing their data for data pooling. Most importantly, the banks do not trust a centralized third party to remain neutral and are reluctant from even sharing models or gradients for performing federated learning as a server can launch model inversion attack on the local models and gain insights into their data. Hence, the banks hesitate to involve a server for the process. In addition to this, the banks are also not trusting each other as they are in the same business in a limited economy that leads to competition. There is a possibility that one or more banks can turn curious and even malicious to disrupt either the training process or stealthily install trojans on a global model so that it can exploit them post deployment of the global model. Document (SONG ZHIHAO ET AL: "Dual-Model Active 1-15 INV. Federated Learning Based on Homomorphic G06N3/045 Encryption", XP034529429) discloses with the rapid growth of data and the improvement of privacy protection requirements, federated learning and homomorphic encryption technology has become an important means to solve data cooperation and privacy protection. This paper proposes a dual-model active federated learning method based on homomorphic encryption, which aims to integrate uncertainty and diversity (representativeness) data selection and protect data privacy. This method utilizes two types of clients. One type of client uses uncertainty-based query strategies to select the data to be marked by evaluating the uncertainty of prediction results; the other is based on diversified query strategy, which selects the data to be marked by calculating the difference between the marked data and the marked data, and uses the data for local model training and parameter updating. Then, the model parameters of the two types of clients are encrypted using homomorphic encryption technology, and are safely uploaded to the server for model parameter aggregation. The server realizes comprehensive model update by aggregating the model parameters of the two types of models, and uses homomorphic encryption technology to protect data privacy. Through iterative training and model updating, we achieve an efficient active learning process that improves model performance while ensuring data privacy (Abstract). Document (SATTLER FELIX ET AL: "Clustered Federated 1-15 Learning: Model-Agnostic Distributed Multitask Optimization Under Privacy Constraints", XP011868628) discloses federated learning (FL) is currently the most widely adopted framework for collaborative training of (deep) machine learning models under privacy constraints. Albeit its popularity, it has been observed that FL yields suboptimal results if the local clients' data distributions diverge. To address this issue, we present clustered FL (CFL), a novel federated multitask learning (FMTL) framework, which exploits geometric properties of the FL loss surface to group the client population into clusters with jointly trainable data distributions. In contrast to existing FMTL approaches, CFL does not require any modifications to the FL communication protocol to be made, is applicable to general nonconvex objectives (in particular, deep neural networks), does not require the number of clusters to be known a priori, and comes with strong mathematical guarantees on the clustering quality. CFL is flexible enough to handle client populations that vary over time and can be implemented in a privacy-preserving way. As clustering is only performed after FL has converged to a stationary point, CFL can be viewed as a postprocessing method that will always achieve greater or equal performance than conventional FL by allowing clients to arrive at more specialized models. We verify our theoretical analysis in experiments with deep convolutional and recurrent neural networks on commonly used FL data sets (Abstract). Document (ANNA BOGDANOVA ET AL: "Federated Learning 1-15 System without Model Sharing through Integration of Dimensional Reduced Data Representations", XP081813217) discloses dimensionality reduction is a commonly used element in a machine learning pipeline that helps to extract important features from high-dimensional data. In this work, we explore an alternative federated learning system that enables integration of dimensionality reduced representations of distributed data prior to a supervised learning task, thus avoiding model sharing among the parties. We compare the performance of this approach on image classification tasks to three alternative frameworks: centralized machine learning, individual machine learning, and Federated Averaging, and analyze potential use cases for a federated learning system without model sharing. Our results show that our approach can achieve similar accuracy as Federated Averaging and performs better than Federated Averaging in a small-user setting (Abstract).

SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for a cross-silo serverless collaborative learning in a malicious client threat-model across interconnected plurality of clients based on a Decentralized Epsilon Cluster Selection (DECS), according to an embodiment of the present disclosure.

FIG. 2A illustrates an exemplary functional block diagram of a client from a plurality of clients of the system of FIG.1, according to some embodiments of the present disclosure.

FIG. 2B illustrates an exemplary functional block diagram of the plurality of clients of the system of FIG.1 which are interconnected, according to some embodiments of the present disclosure.

FIG. 2C illustrates exemplary functional block diagrams of the system of FIG.1, according to some embodiments of the present disclosure.

FIG. 3A through FIG. 3B are exemplary flow diagrams illustrating a method of a learning of the one or more models collaboratively across the plurality of clients based on the decentralized Epsilon cluster selection (DECS), according to some embodiments of the present disclosure.

FIG. 4 illustrates an exemplary graphical representation of an experimental simulated count-plot highlighting a robustness in presence of the malicious client threat-model by serverless implementation of a multi-party computation (MPC) based selection in the DECS, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need to privately aggregate a set of models belonging to different clients without exposing said models. Embodiments of the present disclosure provide a method and system for a cross-silo serverless collaborative learning among a plurality of clients in a malicious client threat-model based on a decentralized Epsilon cluster selection (DECS). The embodiments of the present disclosure provides a single system with own processors and repository, a decentralized and distributed process that involves the plurality of clients working together. It is to be understood that the term "clients" referred throughout the description infers as user terminals and the present disclosure does not use a server (i.e., serverless computing). The plurality of clients who are participating correspond to data silos but is not limited to institutions, insurance providers, and companies. One or more protocols corresponding to the plurality of clients to obtain one or more public information. One or more local models associated with each client is trained and aggregated to obtain one or more global models based on a multi-party computation (MPC). The MPC is a cryptographic technique that allows the plurality of clients to jointly perform computations on corresponding private data without revealing any sensitive data to each other. In the MPC, each party holds their own private input and collaboratively compute a function on corresponding inputs while ensuring confidentiality of the inputs.

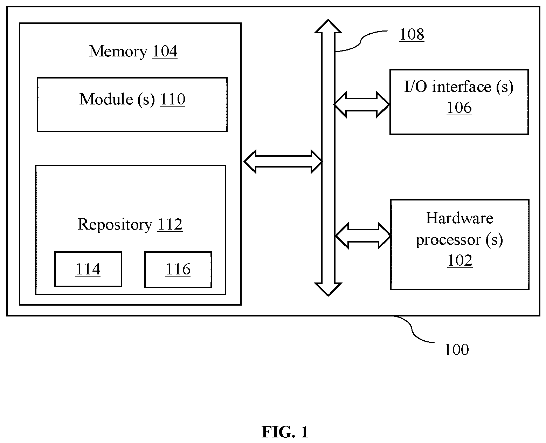

Referring now to the drawings, and more particularly to FIGS. 1 through 4, where similar reference characters denote corresponding features consistently throughout the figures, there are shown preferred embodiments, and these embodiments are described in the context of the following exemplary system and/or method.

FIG. 1 illustrates a system 100 for a cross-silo serverless collaborative learning in a malicious client threat-model across interconnected plurality of clients 202A through 202N based on a decentralized Epsilon cluster selection (DECS), according to an embodiment of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a system bus 108 or a similar mechanism. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, a network cloud, and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting a number of devices to one another.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. The other data 116 may include data generated as a result of the execution of one or more modules in the plurality of modules 110. Herein, the memory for example the memory 104 and the computer program code configured to, with the hardware processor for example the processor 102, causes the system 100 to perform various functions described herein under.

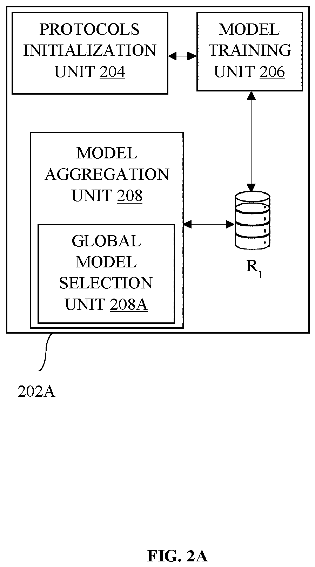

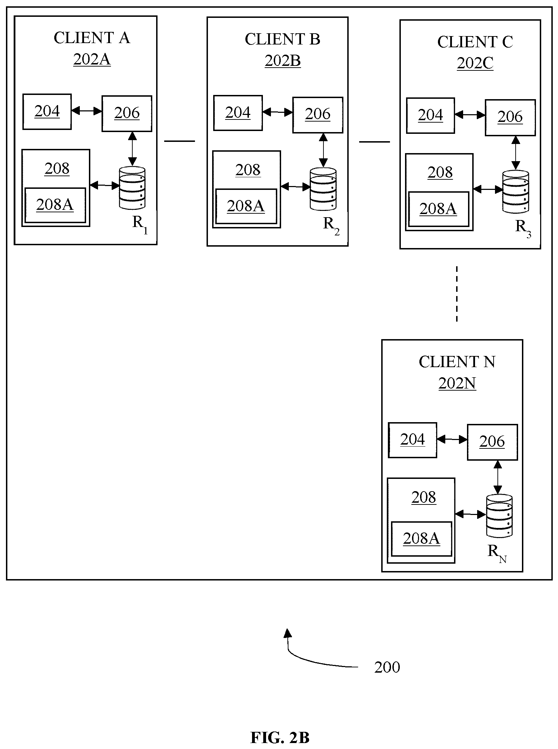

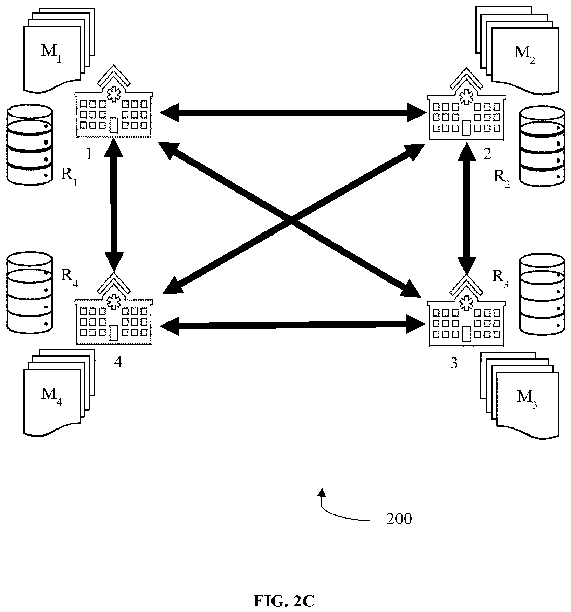

FIG. 2A illustrates an exemplary functional block diagram of a client 202A from a plurality of clients 202A through 202N of the system 100 of FIG. 1, according to some embodiments of the present disclosure. FIG. 2B illustrates an exemplary functional block diagram of the plurality of clients 202A through 202N of the system 100 of FIG.1 which are interconnected, according to some embodiments of the present disclosure. FIG. 2C illustrates exemplary functional block diagrams of the system 100 of FIG. 1, according to some embodiments of the present disclosure. A system 200 may be an example of the system 100 (FIG. 1). In an example embodiment, the system 200 may be embodied in, or is in direct communication with the system, for example the system 100 (FIG. 1). The plurality of clients 202A through 202N includes a protocols initialization unit 204, a model training unit 206, a model aggregation unit 208, and one or more repository 112A through 112N. The model aggregation unit 208 includes a global model selection unit 208A. The protocols initialization unit 204 initialize one or more protocols corresponding to the plurality of clients 202A through 202N to obtain one or more public information. The one or more public information correspond to: (a) architecture of one or more models, (b) a data schema, (c) a batch size, (d) a number of local epochs, (e) a convergence criteria, (f) one or more protocols associated with a multi-party computation (MPC), (g) one or more libraries, and (h) a connectivity (e.g., drop off prevention). The one or more protocols is considered to iteratively perform the step of: (i) one or more local models associated with each client from the plurality of clients 202A through 202N is trained by the model training unit 206, and (ii) the one or more local models are aggregated by the model aggregation unit 208 based on the multi-party computation (MPC) to obtain one or more global models. In an embodiment, training, and aggregation of one or more local models is iteratively performed until an accuracy of the global model or a privacy is met. Each local model correspond to a copy of a global model. The one or more local models corresponds to one or more parametric models ranging from a logistic regression to one or more large neural network with one or more trainable parameters. In an embodiment, the one or more local models may not differ among the plurality of clients 202A through 202N.

The plurality of clients 202A through 202N consider corresponding one or more local models as a private input to a function to obtain the one or more global models. The model aggregation unit 208 transforms one or more local models corresponding to each client to one dimensional vector locally. In an embodiment, one or more individual layers of weights and biases are extracted and concatenated to generate a long sequence for the model to be stretched apart. The model aggregation unit 208 reduce the one dimensional vector of each local model by the MPC based dimensionality reduction technique to obtain one or more dimension-reduced model vectors. For example, the dimensionality reduction techniques correspond to but is not limited to: (a) a principal component analysis (PCA), (b) a singular value decomposition (SVD), (c) an independent component analysis (ICA), (d) an autoencoder - a deep learning based dimensionality reduction technique, and (e) using only n top layers of the model i.e., extracting only the weights and biases that are close to an output of the neural network. In an embodiment, a number of principal components obtained are same as a number of clients in participation.

The model aggregation unit 208 create one or more local shares of the one or more dimension-reduced model vectors and distributed across the plurality of clients 202A through 202N based on the MPC. Each client receives a portion of data associated with other clients which enables the plurality of clients 202A through 202N are not allowed to access the complete data of any other client, which preserves a privacy of the plurality of clients 202A through 202N. The model aggregation unit 208 determine a silhouette score based on the MPC by clustering the one or more dimension-reduced model vectors into (i) a minority cluster, or (ii) a majority cluster. A silhouette coefficient ($S_i$) for each point (i) in a cluster is computed:

$$S_i = (b_i - a_i)/\max (b_i, a_i) \qquad\qquad (1)$$

where $b_i$ corresponds to an average inter cluster distance, and $a_i$ corresponds to an average intra cluster distance. The silhouette score of the clustering is determined by an average of the silhouette coefficient ($S_i$).

The model aggregation unit 208 transform the silhouette score into an epsilon probability (E), based on the following steps: (i) a first hyperparameter (p) and a second hyperparameter (q) are selected by the plurality of clients 202A through 202N based on the one or more protocols; (ii) one or more inputs and target are set for optimization as x and y; x = [0,1, p, q] and y = [0, 1, 0.5, 0.9]; (iii) a first transformation parameter, and a second transformation parameter are initialized in a random manner; and (iv) the first transformation parameter (W), and the second transformation parameter (b) are optimized to obtain a true value of the first transformation parameter (W), and the second transformation parameter (b), from the first hyperparameter (p) and the second hyperparameter (q). The first transformation parameter correspond to weight (W), and the second transformation parameter correspond to a bias (b). The true value of the first transformation parameter (W), and the second transformation parameter (b), are precomputed while initialization of the one or more protocols. In an embodiment, the resultant true value of W and b may be verified independently by each client since the inputs and targets are publicly known/global.

In an embodiment, the optimized W and b are kept with each client, which remains unchanged for the rest of the aggregation rounds. In an embodiment, the steps (i) through (iv) may be performed only once during the first iteration of the process and the resultant obtained i.e., W and b are considered without change for the rest of the process. Hence, from the first iteration onwards, the silhouette score is transformed to the epsilon probability (E) by:

$$\sigma(W * silhouette\_score + b) \qquad\qquad (2)$$

wherein σ is a sigmoid function. In an embodiment, the transformation of the silhouette score to the epsilon probability (E) is performed in every aggregation round for each of the silhouette score.

The model aggregation unit 208 select either a largest cluster, or an entire set of models as an active set, based on the epsilon probability (E). The active set is selected based on the epsilon probability (E), which includes the following steps: (i) one or more private integer numbers are selected by each client in random manner, and the selected one or more integer numbers are added to the MPC; (ii) a sum of the selected one or more integer numbers are divided by non-zero positive integer multiple of ten to obtain a remainder (r) based on the MPC, and shared with each client; (iii) the remainder is divided by the same non-zero positive integer multiple of ten to obtain a random number that is shared with each client; and (iv) the majority cluster is selected as the active set if the selected random number is less than the epsilon probability (E), or else the entire set of models is selected as the active set. The selected integer number is private to each client.

For example, each client chooses an integer number between n to n+1 i.e., 0 and 99 in uniform, where n=0, and choice is private to the corresponding client. The sum of the integer number is divided by 100 to obtain the remainder based on the MPC, and the remainder is shared with the plurality of clients 202A through 202N. The fractional division i.e., the remainder divided by 100 is the chosen random number. Thus, the random number is between 0 and 1 which can be compared to the Epsilon probability (E). If the random number is less than the E, then the majority cluster is chosen as the active set, or else, the entire set of models is chosen as the active set.

The global model selection unit 208A select a $r^{th}$ model from the active set to assign as the global model. The $r^{th}$ model is selected from the active set, which includes the following steps: (i) one or more private random uniform integer between 0 and n-1 is selected by each client in the active set; (ii) the private random uniform integer is added based on the MPC, and (iii) the $r^{th}$ model is assigned as the global model for a next federated round. The 'n' is a number of models in the active set. The sum of the selected one or more private random uniform integers is divided by the 'n' to obtain the remainder (r). In an embodiment, if the global model's convergence criteria are met, then halt the process. The convergence criteria correspond to but is not limited to a desired accuracy, or an early stopping.

In an exemplary embodiment, considering the model selection process in a three clients, includes:

```
Client 1 chooses the random number 8
Client 2 chooses the random number 5
Client 3 chooses the random number 3
In MPC {
Sum = 8+5+3
}
```

The MPC broadcasts sum as 16 without revealing the individual choices of the three clients. The remainder of sum when divided by the number of clients (i.e., 3) is 1. Each client can verify by doing this independently. Since 1 is the result, the Client 1's model is chosen as the global model.

FIG. 2C illustrates an exemplary functional block diagram of the system 100 of FIG. 1, according to some embodiments of the present disclosure. An exemplary use case is a cross-silo collaborative training of one or more motor imagery detection models from EEG (Electro Encephalogram) data held by organizations (i.e., a plurality of hospitals). The system 200 train and aggregates one or more neural models but is not limited to e.g., a graph convolutional model, from four individual hospitals. The accuracy attained by the global model is shown as on par, compared with accuracies exhibited by the centralized trained model using a traditional deep learning. $M_1$-$M_4$ correspond to one or more models, $D_1$-$D_4$ correspond to a private data, $i \in \{1,2,3,4\}$, are the plurality of clients 202A-D e.g., interconnected four hospitals. There can be 'n' number of hospitals, however only showing four is depicted for illustration.

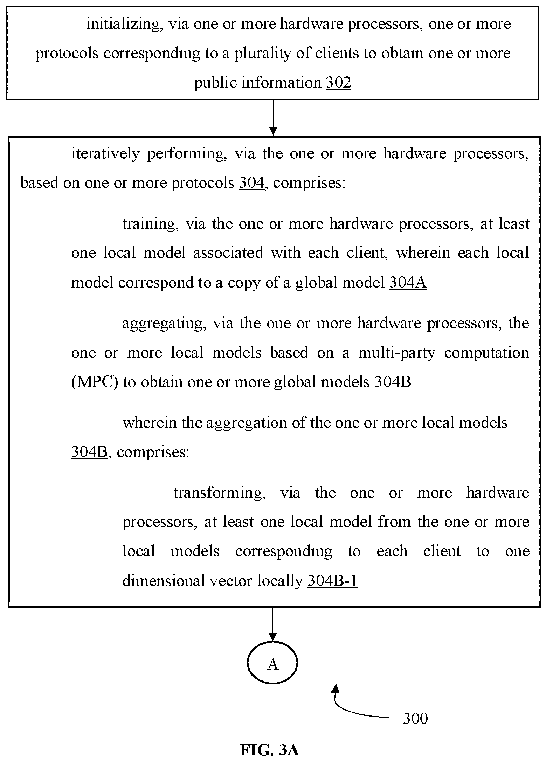

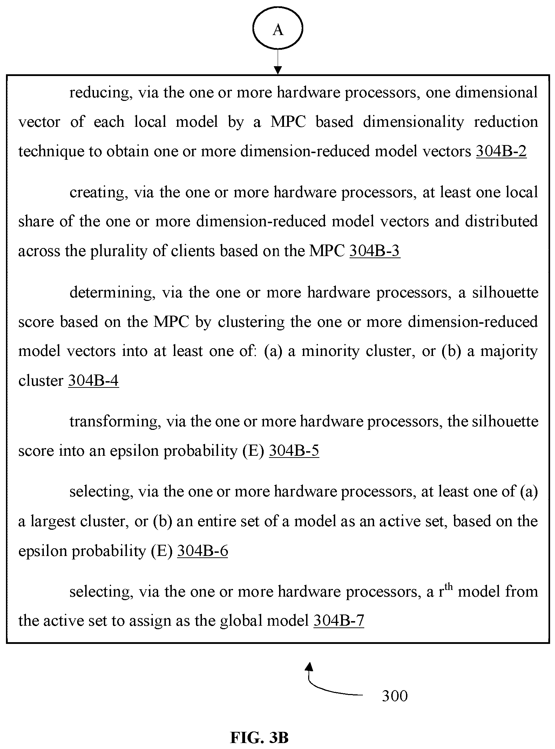

FIG. 3A through FIG. 3B are exemplary flow diagrams illustrating a method 300 of learning of the one or more models collaboratively across the plurality of clients 202A through 202N based on the decentralized Epsilon cluster selection (DECS), according to some embodiments of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIG. 1, FIG. 2A, and FIG. 2B.

At step 302, one or more protocols corresponding to the plurality of clients 202A through 202N are initialized to obtain one or more public information. The one or more public information corresponds to: (a) the architecture of one or more models, (b) the data schema, (c) the batch size, (d) the number of local epochs, (e) the convergence criteria, (f) the one or more protocols associated with the multi-party computation (MPC), (g) the one or more libraries, and (h) the connectivity. At step 304, the one or more protocols is considered to iteratively perform the step of: (i) at step training (304A), the one or more local models associated with each client from the plurality of clients 202A through 202N is trained by the model training unit 206, and (ii) at step (304B), the one or more local models are aggregated by the model aggregation unit 208 based on the multi-party computation (MPC) to obtain the one or more global models. Each local model correspond to the copy of the global model. The one or more local models corresponds to the one or more parametric models ranging from the logistic regression to the one or more large neural network with the one or more trainable parameters. The plurality of clients 202A through 202N consider corresponding one or more local models as the private input to the function to obtain the one or more global models. At step 304B-1, the local model from the one or more local models corresponding to each client is transformed to the one dimensional vector locally. The one or more individual layers of the weights and the biases are extracted and concatenated to generate the long sequence. At step 304B-2, the one dimensional vector of each local model is reduced by the MPC based dimensionality reduction technique to obtain the one or more dimension-reduced model vectors. The number of principal components obtained are same as the number of clients in participation. At step 304B-3, the local share of the one or more dimension-reduced model vectors is created and distributed across the plurality of clients 202A through 202N based on the MPC. Each client receives a portion of data associated with other clients. At step 304B-4, the silhouette score is determined based on the MPC by clustering the one or more dimension-reduced model vectors into at least one of: (a) the minority cluster, or (b) the majority cluster. At step 304B-5, the silhouette score is transformed into the epsilon probability (E). At step 304B-6, at least one of: (a) the largest cluster, or (b) the entire set of models is selected as the active set, based on the epsilon probability (E). At step 304B-7, the $r^{th}$ model is selected from the active set to assign as the global model.

The silhouette score is determined includes: (a) the silhouette coefficient ($S_i$) is computed for each point (i) in the cluster based on (i) the average inter cluster distance ($b_i$), and (ii) the average intra cluster distance ($a_i$), and (b) the silhouette score is determined by the average of the silhouette coefficient ($S_i$). The silhouette score is transformed into the epsilon probability (E), includes: (a) the first hyperparameter (p) and the second hyperparameter (q) is selected by the plurality of clients 202A through 202N based on the one or more protocols, (b) the one or more inputs and the target is set for the optimization as x and y, (c) the first transformation parameter, and the second transformation parameter is initialized in the random manner, (d) the first transformation parameter (W), and the second transformation parameter (b) is optimized to obtain the true value of the first transformation parameter (W), and the second transformation parameter (b), from the first hyperparameter (p) and the second hyperparameter (q), and (e) the silhouette score is transformed into the epsilon probability (E) by sigmoid of multiple of the first transformation parameter (W), and sum of the second transformation parameter (b). The first transformation parameter correspond to the weight (W), and the second transformation parameter correspond to the bias (b). The true value of the first transformation parameter (W), and the second transformation parameter (b), are precomputed while initialization of the one or more protocols. The active set is selected based on the epsilon probability (E), includes: (a) the one or more private integer numbers is selected by each client in random manner, and are added to the MPC, (b) the sum of the selected one or more integer numbers is divided by the non-zero positive integer multiple of ten to obtain the remainder (r) based on the MPC and shared with each client, (c) the remainder is divided by the same non-zero positive integer multiple of ten to obtain a random number that is shared with each client, and (d) the majority cluster is selected as the active set if the selected random number is less than the epsilon probability (E), or else the entire set of models is selected as the active set. The selected integer number is private to each client. The $r^{th}$ model is selected from the active set, includes: (a) the one or more private random integer numbers between 0 and n-1 is selected by each client in the active set, (b) the private random uniform integer is added based on the MPC, and (c) the $r^{th}$ model is assigned as the global model for the next federated round. The 'n' is a number of models in the active set. The sum of the selected one or more private random uniform integers is divided by the 'n' to obtain the remainder (r).

An exemplary pseudo code illustrating the decentralized or a serverless system for a cross-silo collaborative learning of one or more models across interconnected clients based on the decentralized Epsilon cluster selection (DECS).

```
Initialize: Clients, MPC Protocols, connectivity
Consensus: data schema, model architecture, convergence criteria, hyperpara
meters p and q, number of local epochs, batch size
begin
W, b <-- get_params(p, q)
do until convergence:
each client trains local models
global_model <-- MPC_Aggregate(local_models)
end
function get_params(p, q):
set inputs and targets for optimization as
x <- [0,1,p,q] where p and q are hyperparameters agreed upon by consensus
y <-- [0,1,0.5,0.9]
Initialize W and b randomly by one client and broadcast
Apply gradient descent on formula: sigmoid(Wx+b) = y by one client to obta
in W and b and broadcast
Keep W and b with each client
function cluster _evaluate(minority_cluster, majority_cluster):
for cluster in {minority_cluster, majority_cluster} do:
for each point i in cluster do:
Si<-- (bi-ai)/max(bi, ai) where bi is average inter cluster distance and ai is
```

```
max intra cluster distance
return average of both Si
function get_epsilon(silhouette_score):
return sigmoid(W x silhouette_score + b)
function multiparty_select(set1, set2, epsilon):
each client choose a random number between 0 and 99
sum <-- sum of each numbers from clients
sum <-- sum mod(100)
mp_random_numer <-- sum/100
if np_random_number < epsilon:
return set1
else:
return set2
function multiparty _model_select(active_set):
n <-- number of models in the active set
each client choose a random number between 0 and n-1
sum <-- sum of each numbers from clients
sum <-- sum mod(n)
return the sumth model in the active set
function DECS():
transform local models into model_vectors locally
In MPC do: dim_red_vectors <- apply PCA on model_vectors to reduce vect
or dimensions
In MPC do: minority_cluster, majority_cluster <- K_means(dim_red_vectors
, num_clusters=2)
In MPC do: silhouette_score <- cluster_evaluate(minority_cluster, majority_
cluster)
In MPC do: epsilon <- get_epsilon(silhouette_score)
active_set <- multiparty_select(majority_cluster, majority_cluster U minorit
y_cluster, epsilon)
global_model <- multiparty_model_select(active_set)
return global_model
```

A critical part of the pseudo code is the function get_epsilon, which converts the silhouette score of clustering into the epsilon probability for selection. The transformation is a non-linear transformation using the sigmoid function. A sigmoid function requires two parameters - the weight is denoted as W, and the bias is denoted as b. W and b comes from the get_params function. The hyperparameters p and q, that are needed for this is selected by a prior consensus among the participating clients. They are selected mutually on the basis of how suspicious the clients perceive the environment. p and q are known and is common to each client. Any or all of the client can perform the function get_params to optimize W and b and since p and q, the inputs to the function, and the function itself is known to each client, the clients can verify each other's results. The optimized values of W and b are kept with each client and in global scope before the clients start local model training. Here, a set number of clients say N aims to collaboratively train a model without the help of a third-party server. The clients need to have a consensus on the data schema, model architecture and hyperparameters.

In an embodiment, the selection process are performed using modular arithmetic. For example, if there are ten clients and ten of them generated random uniform numbers, and then taking the mod of the sum of the numbers with the number of clients (*multi-party random number = sum of clients random numbers mod(precision)*), then the result may be a number that is also from uniform distribution.

The two functions correspond to i.e., multiparty_select, and multiparty_model_select. The first function allows clients to choose the active set from two sets based on a selection probability which is Epsilon. The second function selects a model from a set of models as the global model. The function returns this selected model which allows the two functions to enable a robust serverless implementation of the ECS.

**Experimental results:**

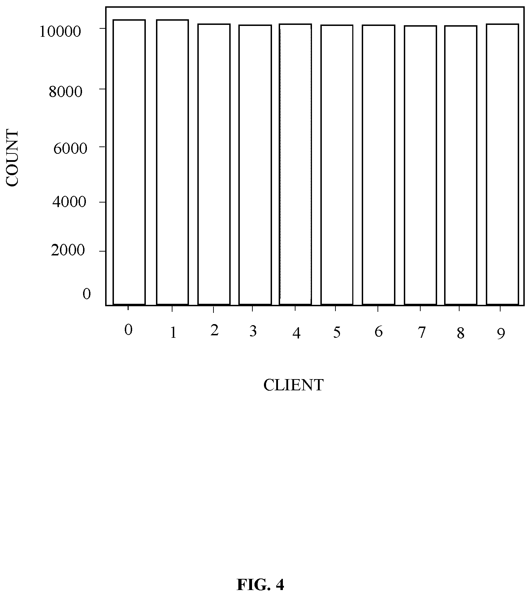

For example, a study is conducted by simulating with ten clients that generates uniform random numbers between 0 and 99. The random numbers are added based on the MPC and divided by 100 and to obtain the remainder as a result, which is repeated 100,000 times. The expected result, if the result is assumed to be from uniform distribution, that each number from 0 to 99 occur 1000 times approximately. For example, a study is conducted to robust serverless implementation of the DECS. FIG. 4 illustrates an exemplary graphical representation of an experimental simulated count-plot highlighting a robustness in presence of the malicious client threat-model by serverless implementation of the multi-party computation (MPC) based selection in the DECS, according to some embodiments of the present disclosure. Considering there are ten clients, a private random number between 0 and 9 is generated, then by adding the ten numbers based on the MPC and perform modulo division by 10. The same is repeated 100,000 times. The robustness of the MPC based selection in the DECS is processed against malicious banks, simulated with client 4 to be malicious. Client 4 always forward the same number i.e., say the number 4, which disrupt or evade the training and the Epsilon probability based malicious client filtering process. Despite this behavior, when the same algorithm runs 100,000 times, then the result is the same as before indicating the robustness of the MPC random selection process against malicious entries.

Another example, a study is conducted by considering a classification task of a motor imagery (MI) on Electroencephalogram (EEG), from which a EEG MI dataset containing sixty four channel EEG recordings of one hundred and nine subjects is utilized by one or more standard EEG recording systems. Each subject participated in three trials of MI movements involving left and right fists, both fists, and both feet, which is denoted as four classification labels. The dataset is shared for simulating multiple clients using stratified random sampling on output labels. A randomly initialized graph convolutional neural model i.e., Spatio-Temporal Graph Neural Networks (ST-GNN) (Vivek et al. 2022, Journal link: https://ieeexplore.ieee.org/document/9926806) is trained using multiple methods to compare the results. The experiment were conducted on any computing system with a graphics processing unit (GPU) with 20GB memory. A global model is trained from three clients using a federated averaging (FedAVG) aggregation algorithm of FL. Further, the server is removed from the setup and implemented the FedAVG using the MPC. Here, models were locally trained by the clients and the averaging of the models was implemented using MPC addition and local division. Finally, the DECS algorithm is implemented for three clients with 0 and 1 malicious clients, and for ten clients with 0 and 3 malicious clients. The hyperparameters of DECS is kept as $p = 0.1$ and $q = 0.15$ which kept the algorithm prejudiced against malicious clients.

The results are as summarized in TABLE 1, the FedAVG exhibits a drop in accuracy compared to corresponding centralized deep learning approach, which is evident in the results as well. Similarly, MPC based serverless FedAVG and DECS also resulted in reduced accuracies. The drop in accuracy of DECS is controlled up to a maximum of five percentage points from the centralized baseline. However, the FedAVG is averaging of models, which is not robust to malicious clients, also extends to MPC based FedAVG which resulted in poor accuracy in the presence of a malicious model. Alternatively, the robustness of DECS is evident since such a significant drop in accuracy was not observed in the presence of malicious clients.

**TABLE 1**

| S.NO | METHODS | PERCENTAGE OF ACCURACY |
|---|---|---|
| 1 | ST-GNN (1 server) | 68.60 |
| 2 | FedAVG (3 non- malicious clients, 1 65.46 server) | 65.46 |
| 3 | MPCFedAvg (3 non- malicious, 0 malicious client) | 66.78 |
| 4 | MPCFedAvg (2 non-malicious, 1 malicious client) | 25.11 |
| 5 | DECS (3 non- malicious, 0 malicious client) | 64.37 |
| 6 | DECS (2 non- malicious, 1 malicious client) | 64.26 |
| 7 | DECS (10 non- malicious, 0 malicious client) | 64.55 |
| 8 | DECS (7 non- malicious, 3 malicious clients) | 64.23 |

The malicious clients, in addition to poisoning their local models, tried to generate non-random numbers to enter the active set and infect the global model. Neither of the two experiments with malicious clients saw the final global model getting infected. The robustness is achieved without the traditional use of a trusted third party aggregation and anomaly detection server. Hence, the DECS is an algorithm that can be used by a consortium of hospitals aiming to train superior MI detection models. The DECS ensures the participating hospitals that their data and models are secure and private. The DECS algorithm is able to collaboratively train models from multiple clients without the involvement of a third party aggregation server. Since data, and even the models i.e., except the global model, do not leave their respective client environments. The collaborative private learning systems built on the DECS are compliant to international privacy and security regulations international collaboration among healthcare providers leading to superior MI detection models that aids in rehabilitation of patients using a robotic prosthetic limbs.

The embodiment of the present disclosure herein addresses the unresolved problem of data privacy, data security, data access rights, and access to heterogeneous data. The embodiment of the present disclosure provides an approach for the cross-silo serverless collaborative learning in the malicious client threat-model across interconnected clients based on the decentralized Epsilon cluster selection (DECS). The embodiment of the present disclosure assure that despite having a random component that is collaboratively decided by a set of private clients, no client(s) can adversely influence the system for corresponding own gain by selecting numbers that benefits them. The embodiment of the present disclosure provides a serverless and a decentralized manner by using the MPC, then control of the entire system goes to the clients themselves. The proposed approach contributed with the DECS is the set of steps that assure that even though the control is given to the clients, apart from preserving their privacy, the clients cannot exploit the system by targeting the randomness seen in the system which prevents the malicious clients from infecting the model.

The proposed approach identifies malicious clients in real-time during each iteration of training and aggregation protocol trying to corrupt the model aggregation process, while preserving privacy of other honest clients. As the proposed approach is fully serverless, there is no privacy leakage and hence, no need of augmenting the solution with differential privacy or other privacy enhancing techniques. Moreover, the proposed approach is based on selection, rather than federated averaging (aggregation) and anomaly detection (i.e., malicious client detection) is built-in by design. The non-linear transformation of the silhouette score to the Epsilon probability without implemented a server constitutes non-obvious to the person skilled in the art.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor implemented method (300), comprising:

initializing (302), via one or more hardware processors, one or more protocols corresponding to a plurality of clients (202A through 202N) to obtain one or more public information, and wherein the one or more public information correspond to: (a) architecture of at least one model, (b) a data schema, (c) a batch size, (d) number of local epochs, (e) a convergence criteria, (f) one or more protocols associated with the multi-party computation (MPC), (g) one or more libraries, and (h) a connectivity; and

iteratively performing (304), via the one or more hardware processors, based on the one or more protocols, comprises:

training (304A), via the one or more hardware processors, at least one local model associated with each client, wherein each local model corresponds to a copy of a global model, and wherein the one or more local models corresponds to at least one parametric model ranging from a logistic regression to one or more large neural network with one or more trainable parameters; and

aggregating (304B), via the one or more hardware processors, the one or more local models based on a multi-party computation (MPC) to obtain one or more global models, and wherein the plurality of clients (202A through 202N) consider corresponding one or more local models as a private input to a function to obtain the one or more global models, and wherein the aggregation of the one or more local models, comprises:

i) transforming (304B-1), via the one or more hardware processors, at least one local model from the one or more local models corresponding to each client to one dimensional vector locally, wherein one or more individual layers of weights and biases are extracted and concatenated;

ii) reducing (304B-2), via the one or more hardware processors, one dimensional vector of each local model by a MPC based dimensionality reduction technique to obtain one or more dimension-reduced model vectors, and wherein a number of principal components obtained are same as a number of clients in participation;

iii) creating (304B-3), via the one or more hardware processors, at least one local share of the one or more dimension-reduced model vectors and distributed across the plurality of clients (202A through 202N) based on the MPC, and wherein each client receives a portion of data associated with other clients;

iv) determining (304B-4), via the one or more hardware processors, a silhouette score based on the MPC by clustering the one or more dimension-reduced model vectors into at least one of: (a) a minority cluster, or (b) a majority cluster, wherein the silhouette score is determined, comprises (a) computing (304B-4a), via the one or more hardware processors, a silhouette coefficient ($S_i$) for each point (i) in a cluster based on (i) an average inter cluster distance ($b_i$), and (ii) an average intra cluster distance ($a_i$); and (b) determining (304B-4b), via the one or more hardware processors, the silhouette score by an average of the silhouette coefficient ($S_i$);

v) transforming (304B-5), via the one or more hardware processors, the silhouette score into an epsilon probability (E), comprises: (a) selecting (304B-5a), via the one or more hardware processors, a first hyperparameter (p) and a second hyperparameter (q) by the plurality of clients (202A through 202N) based on the one or more protocols; (b) setting (304B-5b), via the one or more hardware processors, one or more inputs and target for optimization as x and y; (c) initializing (304B-5c), via the one or more hardware processors, a first transformation parameter, and a second transformation parameter in a random manner, and wherein the first transformation parameter corresponds to weight (W), and the second transformation parameter corresponds to a bias (b); (d) optimizing (304B-5d), via the one or more hardware processors, the first transformation parameter (W), and the second transformation parameter (b) to obtain a true value of the first transformation parameter (W), and the second transformation parameter (b), from the first hyperparameter (p) and the second hyperparameter (q), and wherein the true value of the first transformation parameter (W), and the second transformation parameter (b), are precomputed while initialization of the one or more protocols; and (e) transforming (304B-5e), via the one or more hardware processors, the silhouette score into the epsilon probability (E) by sigmoid of multiple of the first transformation parameter (W), and sum of the second transformation parameter (b);

vi) selecting (304B-6), via the one or more hardware processors, at least one of (a) a largest cluster, or (b) an entire set of models as an active set, based on the epsilon probability (E); and

vii) selecting (304B-7), via the one or more hardware processors, a $r^{th}$ model from the active set to assign as the global model, comprises: (a) selecting (304B-7a), via the one or more hardware processors, one or more private random integer numbers between 0 and n-1 by each client in the active set, wherein 'n' is a number of models in the active set; (b) adding (304B-7b), via the one or more hardware processors, the private random uniform integer based on the MPC, wherein sum of the selected one or more private random uniform integers is divided by the 'n' to obtain the remainder (r); and (c) assigning (304B-7c), via the one or more hardware processors, the $r^{th}$ model as the global model for a next federated round.

2. The processor implemented method (300) as claimed in claim 1, wherein the active set is selected based on the epsilon probability (E), comprises:

(a) selecting (304B-6a), via the one or more hardware processors, one or more private integer numbers by each client in random manner, and are added to the MPC, and wherein the selected integer number is private to each client;
(b) dividing (304B-6b), via the one or more hardware processors, sum of the selected one or more integer numbers by non-zero positive integer multiple of ten to obtain a remainder (r) based on the MPC and shared with each client;
(c) dividing (304B-6c), via the one or more hardware processors, the remainder (r) is again divided by the non-zero positive integer multiple of ten to obtain a random number which is shared with each client; and
(d) selecting (304B-6d), via the one or more hardware processors, the majority cluster as the active set if the selected random number is less than the epsilon probability (E), or else the entire set of models is selected as the active set.

3. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

initialize one or more protocols corresponding to a plurality of clients (202A through 202N) to obtain one or more public information, and wherein the one or more public information correspond to: (a) architecture of at least one model, (b) a data schema, (c) a batch size, (d) number of local epochs, (e) a convergence criteria, (f) one or more protocols associated with the multi-party computation (MPC), (g) one or more libraries, and (h) a connectivity;
iteratively perform based on the one or more protocols, comprises:

train at least one local model associated with each client, wherein each local model corresponds to a copy of a global model, and wherein the one or more local models corresponds to at least one parametric model ranging from a logistic regression to one or more large neural network with one or more trainable parameters; and
aggregate the one or more local models based on a multi-party computation (MPC) to obtain one or more global models, and wherein the plurality of clients (202A through 202N) consider corresponding one or more local models as a private input to a function to obtain the one or more global models, and wherein the aggregation of the one or more local models, comprises:

i) transform at least one local model from the one or more local models corresponding to each client to one dimensional vector locally, wherein one or more individual layers of weights and biases are extracted and concatenated;
ii) reduce one dimensional vector of each local model by a MPC based dimensionality reduction technique to obtain one or more dimension-reduced model vectors, and wherein a number of principal components obtained are same as a number of clients in participation;
iii) create at least one local share of the one or more dimension-reduced model vectors and distributed across the plurality of clients (202A through 202N) based on the MPC, and wherein each client receives a portion of data associated with other clients;
iv) determine a silhouette score based on the MPC by clustering the one or more dimension-reduced model vectors into at least one of: (a) a minority cluster, or (b) a majority cluster, wherein the silhouette score is determined, comprises: (a) compute a silhouette coefficient $(S_i)$ for each point (i) in a cluster based on (i) an average inter cluster distance $(b_i)$, and (ii) an average intra cluster distance $(a_i)$; and (b) determine the silhouette score by an average of the silhouette coefficient $(S_i)$;
v) transform the silhouette score into an epsilon probability (E), comprises: (a) select a first hyperparameter (p) and a second hyperparameter (q) by the plurality of clients (202A through 202N) based on the one or more protocols; (b) set one or more inputs and target for optimization as x and y; (c) initialize a first transformation parameter, and a second transformation parameter in a random manner, and wherein the first transformation parameter corresponds to weight (W), and the second transformation parameter corresponds to a bias (b); (d) optimize the first transformation parameter (W), and the second transformation parameter (b) to obtain a true value of the first transformation parameter (W), and the second transformation parameter (b), from the first hyperparameter (p) and the second hyperparameter (q), and wherein the true value of the first transformation parameter (W), and the second transformation parameter (b), are precomputed while initialization of the one or more protocols; and (e) transform the silhouette score into the epsilon probability (E) by sigmoid of multiple of the first transformation parameter (W), and sum of the second transformation parameter (b);

vi) select at least one of (a) a largest cluster, or (b) an entire set of models as an active set, based on the epsilon probability (E); and

vii) select a $r^{th}$ model from the active set to assign as the global model, comprises: (a) select one or more private random uniform integer between 0 and n-1 by each client in the active set, wherein 'n' is a number of models in the active set; (b) add the private random uniform integer based on the MPC, wherein sum of the selected one or more private random uniform integers is divided by the 'n' to obtain the remainder (r); and (c) assign the $r^{th}$ model as the global model for a next federated round.

4. The system (100) as claimed in claim 3, wherein the one or more hardware processors (102) are configured by the instructions to select the active set based on the epsilon probability (E), comprises:

(a) select one or more integer numbers by each client in random manner, and are added to the MPC, and wherein the selected integer number is private to each client;

(b) divide sum of the selected one or more integer numbers by non-zero positive integer multiple of ten to obtain a remainder (r) based on the MPC and shared with each client;

(c) divide the remainder (r) is again divided by the non-zero positive integer multiple of ten to obtain a random number which is shared with each client; and

(d) select the majority cluster as the active set if the selected random number is less than the epsilon probability (E), or else the entire set of models is selected as the active set.

5. One or more non-transitory machine-readable information storage mediums comprising one or more instructions which when executed by one or more hardware processors cause:

initializing one or more protocols corresponding to a plurality of clients (202A through 202N) to obtain one or more public information, and wherein the one or more public information correspond to: (a) architecture of at least one model, (b) a data schema, (c) a batch size, (d) number of local epochs, (e) a convergence criteria, (f) one or more protocols associated with the multi-party computation (MPC), (g) one or more libraries, and (h) a connectivity; and iteratively performing based on the one or more protocols, comprises:

training at least one local model associated with each client, wherein each local model corresponds to a copy of a global model, and wherein the one or more local models corresponds to at least one parametric model ranging from a logistic regression to one or more large neural network with one or more trainable parameters; and

aggregating the one or more local models based on a multi-party computation (MPC) to obtain one or more global models, and wherein the plurality of clients (202A through 202N) consider corresponding one or more local models as a private input to a function to obtain the one or more global models, and wherein the aggregation of the one or more local models, comprises:

i) transforming at least one local model from the one or more local models corresponding to each client to one dimensional vector locally, wherein one or more individual layers of weights and biases are extracted and concatenated;

ii) reducing one dimensional vector of each local model by a MPC based dimensionality reduction technique to obtain one or more dimension-reduced model vectors, and wherein a number of principal components obtained are same as a number of clients in participation;

iii) creating at least one local share of the one or more dimension-reduced model vectors and distributed across the plurality of clients (202A through 202N) based on the MPC, and wherein each client receives a portion of data associated with other clients;

iv) determining a silhouette score based on the MPC by clustering the one or more dimension-reduced model vectors into at least one of: (a) a minority cluster, or (b) a majority cluster, wherein the silhouette score is determined, comprises: (a) computing a silhouette coefficient $(S_i)$ for each point (i) in a cluster based on (i) an average inter cluster distance $(b_i)$, and (ii) an average intra cluster distance $(a_i)$; and (b) determining the silhouette score by an average of the silhouette coefficient $(S_i)$;

v) transforming the silhouette score into an epsilon probability (E), comprises: (a) selecting a first hyperparameter (p) and a second hyperparameter (q) by the plurality of clients (202A through 202N) based on the one or more protocols; (b) setting one or more inputs and target for optimization as x and y; (c) initializing a first transformation parameter, and a second transformation parameter in a random manner, and wherein the first transformation parameter corresponds to weight (W), and the second transformation parameter corresponds to a bias (b); (d) optimizing the first transformation parameter (W), and the second transformation parameter (b) to obtain a true value of the first transformation parameter (W), and the second transformation parameter (b), from the first hyperparameter (p) and the second hyperparameter (q), and wherein the true value of the first transformation parameter (W), and the second transformation parameter (b), are precomputed while initialization of the one or more protocols; and (e) transforming the silhouette score into the epsilon probability (E) by sigmoid of multiple of the first transformation parameter (W), and sum of the second transformation parameter (b);

vi) selecting at least one of (a) a largest cluster, or (b) an entire set of models as an active set, based on the epsilon probability (E); and

vii) selecting a $r^{th}$ model from the active set to assign as the global model, comprises: (a) selecting one or more private random integer numbers between 0 and n-1 by each client in the active set, wherein 'n' is a number of models in the active set; (b) adding the private random uniform integer based on the MPC, wherein sum of the selected one or more private random uniform integers is divided by the 'n' to obtain the remainder (r); and (c) assigning the $r^{th}$ model as the global model for a next federated round.

6. The one or more non-transitory machine-readable information storage mediums as claimed in claim 5, wherein the active set is selected based on the epsilon probability (E), comprises:

(a) selecting one or more private integer numbers by each client in random manner, and are added to the MPC, and wherein the selected integer number is private to each client;

(b) dividing sum of the selected one or more integer numbers by non-zero positive integer multiple of ten to obtain a remainder (r) based on the MPC and shared with each client;

(c) dividing the remainder (r) is again divided by the non-zero positive integer multiple of ten to obtain a random number which is shared with each client; and

(d) selecting the majority cluster as the active set if the selected random number is less than the epsilon probability (E), or else the entire set of models is selected as the active set.

**Patentansprüche**

1. Prozessorimplementiertes Verfahren (300), umfassend:

Initialisieren (302), über einen oder mehrere Hardwareprozessoren, eines oder mehrerer Protokolle, die einer Mehrzahl von Clients (202A bis 202N) entsprechen, um eine oder mehrere öffentliche Informationen zu erhalten, und wobei die eine oder die mehreren öffentlichen Informationen Folgendem entsprechen: (a) einer Architektur mindestens eines Modells, (b) einem Datenschema, (c) einer Stapelgröße, (d) einer Anzahl von lokalen Epochen, (e) einem Konvergenzkriterium, (f) einem oder mehreren Protokollen, die der Mehrparteienberechnung (MPC) zugeordnet sind, (g) einer oder mehreren Bibliotheken und (h) einer Konnektivität; und

iteratives Durchführen (304), über den einen oder die mehreren Hardwareprozessoren, basierend auf dem einen oder den mehreren Protokollen, umfasst:

Trainieren (304A), über den einen oder die mehreren Hardwareprozessoren, mindestens eines lokalen Modells, das jedem Client zugeordnet ist, wobei jedes lokale Modell einer Kopie eines globalen Modells entspricht, und wobei das eine oder die mehreren lokalen Modelle mindestens einem parametrischen Modell entsprechen, das von einer logistischen Regression zu einem oder mehreren großen neuronalen Netzwerken mit einem oder mehreren trainierbaren Parametern reicht; und

Aggregieren (304B), über den einen oder die mehreren Hardwareprozessoren, des einen oder der mehreren lokalen Modelle basierend auf einer Mehrparteienberechnung (MPC), um ein oder mehrere globale Modelle zu erhalten, und wobei die Mehrzahl von Clients (202A bis 202N) ein oder mehrere entsprechende lokale Modelle als eine private Eingabe in eine Funktion betrachtet, um das eine oder die mehreren globalen Modelle zu erhalten, und wobei die Aggregation des einen oder der mehreren lokalen Modelle umfasst:

i) Transformieren (304B-1), über den einen oder die mehreren Hardwareprozessoren, mindestens eines lokalen Modells von dem einen oder den mehreren lokalen Modellen, die jedem Client entsprechen, lokal in einen dimensionalen Vektor, wobei eine oder mehrere individuelle Schichten von Gewichten und Verzerrungen extrahiert und verkettet werden;

ii) Reduzieren (304B-2), über den einen oder die mehreren Hardwareprozessoren, eines dimensionalen Vektors jedes lokalen Modells durch eine MPC-basierte Dimensionalitätsreduktionstechnik, um einen oder mehrere dimensionsreduzierte Modellvektoren zu erhalten, und wobei eine Anzahl von erhaltenen Hauptkomponenten gleich einer Anzahl von teilnehmenden Clients ist;

iii) Erzeugen (304B-3), über den einen oder die mehreren Hardwareprozessoren, mindestens eines lokalen Anteils des einen oder der mehreren dimensionsreduzierten Modellvektoren und verteilt über die Mehrzahl von Clients (202A bis 202N) basierend auf der MPC, und wobei jeder Client einen Teil von Daten empfängt, die anderen Clients zugeordnet sind;

iv) Bestimmen (304B-4), über den einen oder die mehreren Hardwareprozessoren, einer Silhouettenbewertung basierend auf der MPC durch Clustern des einen oder der mehreren dimensionsreduzierten Modellvektoren in mindestens eines von: (a) einem Minderheitscluster oder (b) einem Mehrheitscluster, wobei die Silhouettenbewertung bestimmt wird, umfasst (a) Berechnen (304B-4a), über den einen oder die mehreren Hardwareprozessoren, eines Silhouettenkoeffizienten ($S_i$) für jeden Punkt (i) in einem Cluster basierend auf (i) einer durchschnittlichen Inter-Cluster-Distanz ($b_i$) und (ii) einer durchschnittlichen Intra-Cluster-Distanz ($a_i$); und (b) Bestimmen (304B-4b), über den einen oder die mehreren Hardwareprozessoren, der Silhouettenbewertung durch einen Durchschnitt des Silhouettenkoeffizienten ($S_i$);

v) Transformieren (304B-5), über den einen oder die mehreren Hardwareprozessoren, der Silhouettenbewertung in eine Epsilonwahrscheinlichkeit (E), umfasst: (a) Auswählen (304B-5a), über den einen oder die mehreren Hardwareprozessoren, eines ersten Hyperparameters (p) und eines zweiten Hyperparameters (q) durch die Mehrzahl von Clients (202A bis 202N) basierend auf dem einen oder den mehreren Protokollen; (b) Einstellen (304B-5b), über den einen oder die mehreren Hardwareprozessoren, einer oder mehrerer Eingaben und eines oder mehrerer Ziele zur Optimierung als x und y; (c) Initialisieren (304B-5c), über den einen oder die mehreren Hardwareprozessoren, eines ersten Transformationsparameters und eines zweiten Transformationsparameters auf eine zufällige Weise, und wobei der erste Transformationsparameter einem Gewicht (W) entspricht und der zweite Transformationsparameter einer Verzerrung (b) entspricht; (d) Optimieren (304B-5d), über den einen oder die mehreren Hardwareprozessoren, des ersten Transformationsparameters (W) und des zweiten Transformationsparameters (b), um einen wahren Wert des ersten Transformationsparameters (W) und des zweiten Transformationsparameters (b) aus dem ersten Hyperparameter (p) und dem zweiten Hyperparameter (q) zu erhalten, und wobei der wahre Wert des ersten Transformationsparameters (W) und des zweiten Transformationsparameters (b) während der Initialisierung des einen oder der mehreren Protokolle vorberechnet werden; und (e) Transformieren (304B-5e), über den einen oder die mehreren Hardwareprozessoren, der Silhouettenbewertung in die Epsilonwahrscheinlichkeit (E) durch Sigmoid eines Vielfachen des ersten Transformationsparameters (W) und einer Summe des zweiten Transformationsparameters (b);

vi) Auswählen (304B-6), über den einen oder die mehreren Hardwareprozessoren, mindestens eines von (a) einem größten Cluster oder (b) einem gesamten Satz von Modellen als einen aktiven Satz basierend auf der Epsilonwahrscheinlichkeit (E); und

vii) Auswählen (304B-7), über den einen oder die mehreren Hardwareprozessoren, eines r-ten Modells aus dem aktiven Satz zum Zuweisen als das globale Modell, umfasst: (a) Auswählen (304B-7a), über den einen oder die mehreren Hardwareprozessoren, einer oder mehrerer privater zufälliger Ganzzahlen zwischen 0 und n-1 durch jeden Client in dem aktiven Satz, wobei 'n' eine Anzahl von Modellen in dem aktiven Satz ist; (b) Hinzufügen (304B-7b), über den einen oder die mehreren Hardwareprozessoren, der privaten zufälligen einheitlichen Ganzzahl basierend auf der MPC, wobei die Summe der ausgewählten einen oder mehreren privaten zufälligen einheitlichen Ganzzahlen durch das 'n' dividiert wird, um den Rest (r) zu erhalten; und (c) Zuweisen (304B-7c), über den einen oder die mehreren Hardwareprozessoren, des r-ten Modells als das globale Modell für eine nächste föderierte Runde.

2. Prozessorimplementiertes Verfahren (300) nach Anspruch 1, wobei der aktive Satz basierend auf der Epsilonwahrscheinlichkeit (E) ausgewählt wird, umfasst:

(a) Auswählen (304B-6a), über den einen oder die mehreren Hardwareprozessoren, einer oder mehrerer privater Ganzzahlen durch jeden Client auf eine zufällige Weise und werden zu der MPC hinzugefügt, und wobei die ausgewählte Ganzzahl für jeden Client privat ist;

(b) Dividieren (304B-6b), über den einen oder die mehreren Hardwareprozessoren, der Summe der ausgewählten einen oder mehreren Ganzzahlen durch ein positives ganzzahliges Vielfaches von zehn ungleich null, um einen Rest (r) basierend auf der MPC und gemeinsam mit jedem Client zu erhalten;

(c) Dividieren (304B-6c), über den einen oder die mehreren Hardwareprozessoren, des Rests (r) erneut durch das positive ganzzahlige Vielfache von zehn ungleich null dividiert wird, um eine Zufallszahl zu erhalten, die mit jedem Client gemeinsam genutzt wird; und

(d) Auswählen (304B-6d), über den einen oder die mehreren Hardwareprozessoren, des Mehrheitsclusters als den aktiven Satz, wenn die ausgewählte Zufallszahl kleiner als die Epsilonwahrscheinlichkeit (E) ist, oder ansonsten der gesamte Satz von Modellen als der aktive Satz ausgewählt wird.

3. System (100), umfassend:

einen Speicher (104), der Anweisungen speichert;

eine oder mehrere Kommunikationsschnittstellen (106); und

einen oder mehrere Hardwareprozessoren (102), die über die eine oder die mehreren Kommunikationsschnittstellen (106) mit dem Speicher (104) gekoppelt sind, wobei der eine oder die mehreren Hardwareprozessoren (102) durch die Anweisungen konfiguriert sind zum:

Initialisieren eines oder mehrerer Protokolle, die einer Mehrzahl von Clients (202A bis 202N) entsprechen, um eine oder die mehreren öffentlichen Informationen zu erhalten, und wobei die eine oder die mehreren öffentlichen Informationen Folgendem entsprechen: (a) einer Architektur mindestens eines Modells, (b) einem Datenschema, (c) einer Stapelgröße, (d) einer Anzahl von lokalen Epochen, (e) einem Konvergenzkriterium, (f) einem oder mehreren Protokollen, die der Mehrparteienberechnung (MPC) zugeordnet sind, (g) einer oder mehreren Bibliotheken und (h) einer Konnektivität;

iteratives Durchführen basierend auf dem einen oder den mehreren Protokollen, umfasst:

Trainieren mindestens eines lokalen Modells, das jedem Client zugeordnet ist, wobei jedes lokale Modell einer Kopie eines globalen Modells entspricht, und wobei das eine oder die mehreren lokalen Modelle mindestens einem parametrischen Modell entsprechen, das von einer logistischen Regression zu einem oder mehreren großen neuronalen Netzwerken mit einem oder mehreren trainierbaren Parametern reicht; und

Aggregieren des einen oder der mehreren lokalen Modelle basierend auf einer Mehrparteienberechnung (MPC), um ein oder mehrere globale Modelle zu erhalten, und wobei die Mehrzahl von Clients (202A bis 202N) ein oder mehrere entsprechende lokale Modelle als eine private Eingabe in eine Funktion betrachtet, um das eine oder die mehreren globalen Modelle zu erhalten, und wobei die Aggregation des einen oder der mehreren lokalen Modelle umfasst:

i) Transformieren mindestens eines lokalen Modells von dem einen oder den mehreren lokalen Modellen, die jedem Client entsprechen, lokal in einen dimensionalen Vektor, wobei eine oder mehrere individuelle Schichten von Gewichten und Verzerrungen extrahiert und verkettet werden;

ii) Reduzieren eines dimensionalen Vektors jedes lokalen Modells durch eine MPC-basierte Dimensionalitätsreduktionstechnik, um einen oder mehrere dimensionsreduzierte Modellvektoren zu erhalten, und wobei eine Anzahl von erhaltenen Hauptkomponenten gleich einer Anzahl von teilnehmenden Clients ist;

iii) Erzeugen mindestens eines lokalen Anteils des einen oder der mehreren dimensionsreduzierten Modellvektoren und verteilt über die Mehrzahl von Clients (202A bis 202N) basierend auf der MPC, und wobei jeder Client einen Teil von Daten empfängt, die anderen Clients zugeordnet sind;

iv) Bestimmen einer Silhouettenbewertung basierend auf der MPC durch Clustern des einen oder der mehreren dimensionsreduzierten Modellvektoren in mindestens eines von: (a) einem Minderheitscluster oder (b) einem Mehrheitscluster, wobei die Silhouettenbewertung bestimmt wird, umfasst: (a) Berechnen eines Silhouettenkoeffizienten $(S_i)$ für jeden Punkt (i) in einem Cluster basierend auf (i) einer durchschnittlichen Inter-Cluster-Distanz $(b_i)$ und (ii) einer durchschnittlichen Intra-Cluster-Distanz $(a_i)$; und (b) Bestimmen der Silhouettenbewertung durch einen Durchschnitt des Silhouettenkoeffizienten $(S_i)$;

v) Transformieren der Silhouettenbewertung in eine Epsilonwahrscheinlichkeit (E), umfasst: (a) Auswählen eines ersten Hyperparameters (p) und eines zweiten Hyperparameters (q) durch die Mehrzahl von Clients (202A bis 202N) basierend auf dem einen oder den mehreren Protokollen; (b) Einstellen einer oder mehrerer Eingaben und eines oder mehrerer Ziele zur Optimierung als x und y; (c) Initialisieren eines ersten Transformationsparameters und eines zweiten Transformationsparameters auf eine zufällige Weise, und wobei der erste Transformationsparameter einem Gewicht (W) entspricht und der zweite Transformationsparameter einer Verzerrung (b) entspricht; (d) Optimieren des ersten Transformationsparameters (W) und des zweiten Transformationsparameters (b), um einen wahren Wert des ersten Transformationsparameters (W) und des zweiten Transformationsparameters (b) aus dem ersten Hyperparameter (p) und dem zweiten Hyperparameter (q) zu erhalten, und wobei der wahre Wert des ersten Transformationsparameters (W) und des zweiten Transformationsparameters (b) während der Initialisierung des einen oder der mehreren Protokolle vorberechnet werden; und (e) Transformieren der Silhouettenbewertung in die Epsilonwahrscheinlichkeit (E) durch Sigmoid eines Vielfachen des ersten Transformationsparameters (W) und einer Summe des zweiten Transformationsparameters (b);

vi) Auswählen mindestens eines von (a) einem größten Cluster oder (b) einem gesamten Satz von Modellen als einen aktiven Satz basierend auf der Epsilonwahrscheinlichkeit (E); und

vii) Auswählen eines r-ten Modells aus dem aktiven Satz zum Zuweisen als das globale Modell, umfasst: (a) Auswählen einer oder mehrerer privater zufälliger einheitlicher Ganzzahlen zwischen 0 und n-1 durch jeden Client in dem aktiven Satz, wobei 'n' eine Anzahl von Modellen in dem aktiven Satz ist; (b) Hinzufügen der privaten zufälligen einheitlichen Ganzzahl basierend auf der MPC, wobei die Summe der ausgewählten einen oder mehreren privaten zufälligen einheitlichen Ganzzahlen durch das 'n' dividiert wird, um den Rest (r) zu erhalten; und (c) Zuweisen des r-ten Modells als das globale Modell für eine nächste föderierte Runde.

4. System (100) nach Anspruch 3, wobei der eine oder die mehreren Hardwareprozessoren (102) durch die Anweisungen konfiguriert sind, um den aktiven Satz basierend auf der Epsilonwahrscheinlichkeit (E) auszuwählen, umfasst:

(a) Auswählen einer oder mehrerer Ganzzahlen durch jeden Client auf eine zufällige Weise und werden zu der MPC hinzugefügt, und wobei die ausgewählte Ganzzahl für jeden Client privat ist;

(b) Dividieren der Summe der ausgewählten einen oder mehreren Ganzzahlen durch ein positives ganzzahliges Vielfaches von zehn ungleich null, um einen Rest (r) basierend auf der MPC und gemeinsam mit jedem Client zu erhalten;

(c) Dividieren des Rests (r) erneut durch das positive ganzzahlige Vielfache von zehn ungleich null dividiert wird, um eine Zufallszahl zu erhalten, die mit jedem Client gemeinsam genutzt wird; und

(d) Auswählen des Mehrheitsclusters als den aktiven Satz, wenn die ausgewählte Zufallszahl kleiner als die Epsilonwahrscheinlichkeit (E) ist, oder ansonsten der gesamte Satz von Modellen als der aktive Satz ausgewählt wird.

5. Ein oder mehrere nichtflüchtige maschinenlesbare Informationsspeichermedien, umfassend eine oder mehrere Anweisungen, die bei Ausführung durch einen oder mehrere Hardwareprozessoren bewirken:

Initialisieren eines oder mehrerer Protokolle, die einer Mehrzahl von Clients (202A bis 202N) entsprechen, um eine oder mehrere öffentliche Informationen zu erhalten, und wobei die eine oder die mehreren öffentlichen Informationen Folgendem entsprechen: (a) einer Architektur mindestens eines Modells, (b) einem Datenschema, (c) einer Stapelgröße, (d) einer Anzahl von lokalen Epochen, (e) einem Konvergenzkriterium, (f) einem oder mehreren Protokollen, die der Mehrparteienberechnung (MPC) zugeordnet sind, (g) einer oder mehreren Bibliotheken und (h) einer Konnektivität; und

iteratives Durchführen basierend auf dem einen oder den mehreren Protokollen, umfasst:

Trainieren mindestens eines lokalen Modells, das jedem Client zugeordnet ist, wobei jedes lokale Modell einer Kopie eines globalen Modells entspricht, und wobei das eine oder die mehreren lokalen Modelle mindestens einem parametrischen Modell entsprechen, das von einer logistischen Regression zu einem oder mehreren großen neuronalen Netzwerken mit einem oder mehreren trainierbaren Parametern reicht; und

Aggregieren des einen oder der mehreren lokalen Modelle basierend auf einer Mehrparteienberechnung (MPC), um ein oder mehrere globale Modelle zu erhalten, und wobei die Mehrzahl von Clients (202A bis 202N) ein oder mehrere entsprechende lokale Modelle als eine private Eingabe in eine Funktion betrachtet, um das eine oder die mehreren globalen Modelle zu erhalten, und wobei die Aggregation des einen oder der mehreren lokalen Modelle umfasst:

i) Transformieren mindestens eines lokalen Modells von dem einen oder den mehreren lokalen Modellen, die jedem Client entsprechen, lokal in einen dimensionalen Vektor, wobei eine oder mehrere individuelle Schichten von Gewichten und Verzerrungen extrahiert und verkettet werden;

ii) Reduzieren eines dimensionalen Vektors jedes lokalen Modells durch eine MPC-basierte Dimensionalitätsreduktionstechnik, um einen oder mehrere dimensionsreduzierte Modellvektoren zu erhalten, und wobei eine Anzahl von erhaltenen Hauptkomponenten gleich einer Anzahl von teilnehmenden Clients ist;

iii) Erzeugen mindestens eines lokalen Anteils des einen oder der mehreren dimensionsreduzierten Modellvektoren und verteilt über die Mehrzahl von Clients (202A bis 202N) basierend auf der MPC, und wobei jeder Client einen Teil von Daten empfängt, die anderen Clients zugeordnet sind;

iv) Bestimmen einer Silhouettenbewertung basierend auf der MPC durch Clustern des einen oder der mehreren dimensionsreduzierten Modellvektoren in mindestens eines von: (a) einem Minderheitscluster oder (b) einem Mehrheitscluster, wobei die Silhouettenbewertung bestimmt wird, umfasst: (a) Berechnen eines Silhouettenkoeffizienten ($S_i$) für jeden Punkt (i) in einem Cluster basierend auf (i) einer durchschnittlichen Inter-Cluster-Distanz ($b_i$) und (ii) einer durchschnittlichen Intra-Cluster-Distanz ($a_i$); und (b) Bestimmen der Silhouettenbewertung durch einen Durchschnitt des Silhouettenkoeffizienten ($S_i$);

v) Transformieren der Silhouettenbewertung in eine Epsilonwahrscheinlichkeit (E), umfasst: (a) Auswählen eines ersten Hyperparameters (p) und eines zweiten Hyperparameters (q) durch die Mehrzahl von Clients (202A bis 202N) basierend auf dem einen oder den mehreren Protokollen; (b) Einstellen einer oder mehrerer Eingaben und eines oder mehrerer Ziele zur Optimierung als x und y; (c) Initialisieren eines ersten Transformationsparameters und eines zweiten Transformationsparameters auf eine zufällige Weise, und wobei der erste Transformationsparameter einem Gewicht (W) entspricht und der zweite Transformationsparameter einer Verzerrung (b) entspricht; (d) Optimieren des ersten Transformationsparameters (W) und des zweiten Transformationsparameters (b), um einen wahren Wert des ersten Transformationsparameters (W) und des zweiten Transformationsparameters (b) aus dem ersten Hyperparameter (p) und dem zweiten Hyperparameter (q) zu erhalten, und wobei der wahre Wert des ersten Transformationsparameters (W) und des zweiten Transformationsparameters (b) während der Initialisierung des einen oder der mehreren Protokolle vorberechnet werden; und (e) Transformieren der Silhouettenbewertung in die Epsilonwahrscheinlichkeit (E) durch Sigmoid eines Vielfachen des ersten Transformationsparameters (W) und einer Summe des zweiten Transformationsparameters (b);

vi) Auswählen mindestens eines von (a) einem größten Cluster oder (b) einem gesamten Satz von Modellen als einen aktiven Satz basierend auf der Epsilonwahrscheinlichkeit (E); und

vii) Auswählen eines r-ten Modells aus dem aktiven Satz zum Zuweisen als das globale Modell, umfasst: (a) Auswählen einer oder mehrerer privater zufälliger Ganzzahlen zwischen 0 und n-1 durch jeden Client in dem aktiven Satz, wobei 'n' eine Anzahl von Modellen in dem aktiven Satz ist; (b) Hinzufügen der privaten zufälligen einheitlichen Ganzzahl basierend auf der MPC, wobei die Summe der ausgewählten einen oder mehreren privaten zufälligen einheitlichen Ganzzahlen durch das 'n' dividiert wird, um den Rest (r) zu erhalten; und (c) Zuweisen des r-ten Modells als das globale Modell für eine nächste föderierte Runde.

6. Ein oder mehrere nichtflüchtige maschinenlesbare Informationsspeichermedien nach Anspruch 5, wobei der aktive Satz basierend auf der Epsilonwahrscheinlichkeit (E) ausgewählt wird, umfasst:

(a) Auswählen einer oder mehrerer privater Ganzzahlen durch jeden Client auf eine zufällige Weise und werden zu der MPC hinzugefügt, und wobei die ausgewählte Ganzzahl für jeden Client privat ist;

(b) Dividieren der Summe der ausgewählten einen oder mehreren Ganzzahlen durch ein positives ganzzahliges Vielfaches von zehn ungleich null, um einen Rest (r) basierend auf der MPC und gemeinsam mit jedem Client zu erhalten;

(c) Dividieren des Rests (r) erneut durch das positive ganzzahlige Vielfache von zehn ungleich null dividiert wird, um eine Zufallszahl zu erhalten, die mit jedem Client gemeinsam genutzt wird; und

(d) Auswählen des Mehrheitsclusters als den aktiven Satz, wenn die ausgewählte Zufallszahl kleiner als die Epsilonwahrscheinlichkeit (E) ist, oder ansonsten der gesamte Satz von Modellen als der aktive Satz ausgewählt wird.

**Revendications**

1.  Procédé mis en œuvre par processeur (300), comprenant :

    l'initialisation (302), via un ou plusieurs processeurs matériels, d'un ou plusieurs protocoles correspondant à une pluralité de clients (202A à 202N) pour obtenir une ou plusieurs informations publiques, et dans lequel les une ou plusieurs informations publiques correspondent à : (a) une architecture d'au moins un modèle, (b) un schéma de données, (c) une taille de lot, (d) un nombre d'époques locales, (e) un critère de convergence, (f) un ou plusieurs protocoles associés au calcul multipartite (MPC), (g) une ou plusieurs bibliothèques, et (h) une connectivité ; et
    la réalisation itérative (304), via les un ou plusieurs processeurs matériels, sur la base des un ou plusieurs protocoles, comprend :

    l'entraînement (304A), via les un ou plusieurs processeurs matériels, d'au moins un modèle local associé à chaque client, dans lequel chaque modèle local correspond à une copie d'un modèle global, et dans lequel les un ou plusieurs modèles locaux correspondent à au moins un modèle paramétrique allant d'une régression logistique à un ou plusieurs grands réseaux neuronaux avec un ou plusieurs paramètres pouvant être appris ; et
    l'agrégation (304B), via les un ou plusieurs processeurs matériels, des un ou plusieurs modèles locaux sur la base d'un calcul multipartite (MPC) pour obtenir un ou plusieurs modèles globaux, et dans lequel la pluralité de clients (202A à 202N) considèrent un ou plusieurs modèles locaux correspondants comme une entrée privée d'une fonction pour obtenir les un ou plusieurs modèles globaux, et dans lequel l'agrégation des un ou plusieurs modèles locaux, comprend :

    i) la transformation (304B-1), via les un ou plusieurs processeurs matériels, d'au moins un modèle local à partir des un ou plusieurs modèles locaux correspondant à chaque client en un vecteur dimensionnel localement, dans lequel une ou plusieurs couches individuelles de poids et de biais sont extraites et concaténées ;
    ii) la réduction (304B-2), via les un ou plusieurs processeurs matériels, d'un vecteur dimensionnel de chaque modèle local par une technique de réduction de dimensionnalité basée sur MPC pour obtenir un ou plusieurs vecteurs de modèle à dimension réduite, et dans lequel un nombre de composantes principales obtenus est le même qu'un nombre de clients participants ;
    iii) la création (304B-3), via les un ou plusieurs processeurs matériels, d'au moins une part locale des un ou plusieurs vecteurs de modèle à dimension réduite et distribués à travers la pluralité de clients (202A à 202N) sur la base du MPC, et dans lequel chaque client reçoit une partie de données associées à d'autres clients ;
    iv) la détermination (304B-4), via les un ou plusieurs processeurs matériels, d'un score de silhouette sur la base du MPC en regroupant les un ou plusieurs vecteurs de modèle à dimension réduite en au moins l'un parmi : (a) un groupe minoritaire, ou (b) un groupe majoritaire, dans lequel le score de silhouette est déterminé, comprend (a) le calcul (304B-4a), via les un ou plusieurs processeurs matériels, d'un coefficient de silhouette ($S_i$) pour chaque point (i) dans un groupe sur la base (i) d'une distance inter-groupe moyenne ($b_i$), et (ii) d'une distance intra-groupe moyenne ($a_i$) ; et (b) la détermination (304B-4b), via les un ou plusieurs processeurs matériels, du score de silhouette par une moyenne du coefficient de silhouette ($S_i$) ;
    v) la transformation (304B-5), via les un ou plusieurs processeurs matériels, du score de silhouette en une probabilité d'epsilon (E), comprend : (a) la sélection (304B-5a), via les un ou plusieurs processeurs matériels, d'un premier hyperparamètre (p) et d'un second hyperparamètre (q) par la pluralité de clients (202A à 202N) sur la base des un ou plusieurs protocoles ; (b) le réglage (304B-5b), via les un ou plusieurs processeurs matériels, d'une ou plusieurs entrées et cibles pour une optimisation en tant que x et y ; (c) l'initialisation (304B-5c), via les un ou plusieurs processeurs matériels, d'un premier paramètre de transformation, et d'un second paramètre de transformation d'une manière aléatoire, et dans lequel le premier paramètre de transformation correspond à un poids (W), et le second paramètre de transformation correspond à un biais (b) ; (d) l'optimisation (304B-5d), via les un ou plusieurs processeurs matériels, du premier paramètre de transformation (W), et du second paramètre de transformation (b) pour obtenir une valeur vraie du premier paramètre de transformation (W), et du second paramètre de transformation (b), à partir du premier hyperparamètre (p) et du second hyperparamètre (q), et dans lequel la valeur vraie du premier paramètre de transformation (W), et du second paramètre de transformation (b), sont précalculées pendant l'initialisation des un ou plusieurs protocoles ; et (e) la transformation (304B-5e), via les un ou plusieurs processeurs matériels, du score de silhouette en la probabilité d'epsilon (E) par application d'une fonction sigmoïde d'un multiple du premier paramètre de transformation (W), et d'une somme du second paramètre de transformation (b) ;

vi) la sélection (304B-6), via les un ou plusieurs processeurs matériels, d'au moins l'un parmi (a) un groupe le plus grand, ou (b) un ensemble entier de modèles en tant qu'ensemble actif, sur la base de la probabilité d'epsilon (E) ; et

vii) la sélection (304B-7), via les un ou plusieurs processeurs matériels, d'un $r^e$ modèle à partir de l'ensemble actif à attribuer en tant que modèle global, comprend : (a) la sélection (304B-7a), via les un ou plusieurs processeurs matériels, d'un ou plusieurs nombres entiers aléatoires privés entre 0 et n-1 par chaque client dans l'ensemble actif, dans lequel « n » est un nombre de modèles dans l'ensemble actif ; (b) l'ajout (304B-7b), via les un ou plusieurs processeurs matériels, de l'entier uniforme aléatoire privé sur la base du MPC, dans lequel la somme des un ou plusieurs entiers uniformes aléatoires privés sélectionnés est divisée par le « n » pour obtenir le reste (r) ; et(c) l'attribution (304B-7c), via les un ou plusieurs processeurs matériels, du $r^e$ modèle en tant que modèle global pour un prochain tour fédéré.

2. Procédé mis en œuvre par processeur (300) selon la revendication 1, dans lequel l'ensemble actif est sélectionné sur la base de la probabilité d'epsilon (E), comprend :

(a) la sélection (304B-6a), via les un ou plusieurs processeurs matériels, d'un ou plusieurs nombres entiers privés par chaque client d'une manière aléatoire, et sont ajoutés au MPC, et dans lequel le nombre entier sélectionné est privé pour chaque client ;

(b) la division (304B-6b), via les un ou plusieurs processeurs matériels, de la somme des un ou plusieurs nombres entiers sélectionnés par un multiple entier positif non nul de dix pour obtenir un reste (r) sur la base du MPC et partagé avec chaque client ;

(c) la division (304B-6c), via les un ou plusieurs processeurs matériels, du reste (r) est à nouveau divisé par le multiple entier positif non nul de dix pour obtenir un nombre aléatoire qui est partagé avec chaque client ; et

(d) la sélection (304B-6d), via les un ou plusieurs processeurs matériels, du groupe majoritaire en tant qu'ensemble actif si le nombre aléatoire sélectionné est inférieur à la probabilité d'epsilon (E), ou sinon l'ensemble entier de modèles est sélectionné en tant qu'ensemble actif.

3. Système (100), comprenant :

une mémoire (104) stockant des instructions ;
une ou plusieurs interfaces de communication (106) ; et
un ou plusieurs processeurs matériels (102) couplés à la mémoire (104) via les une ou plusieurs interfaces de communication (106), dans lequel les un ou plusieurs processeurs matériels (102) sont configurés par les instructions pour :

initialiser un ou plusieurs protocoles correspondant à une pluralité de clients (202A à 202N) pour obtenir une ou plusieurs informations publiques, et dans lequel les une ou plusieurs informations publiques correspondent à : (a) une architecture d'au moins un modèle, (b) un schéma de données, (c) une taille de lot, (d) un nombre d'époques locales, (e) un critère de convergence, (f) un ou plusieurs protocoles associés au calcul multipartite (MPC), (g) une ou plusieurs bibliothèques, et (h) une connectivité ;
la réalisation itérative sur la base des un ou plusieurs protocoles, comprend :

l'entraînement d'au moins un modèle local associé à chaque client, dans lequel chaque modèle local correspond à une copie d'un modèle global, et dans lequel les un ou plusieurs modèles locaux correspondent à au moins un modèle paramétrique allant d'une régression logistique à un ou plusieurs grands réseaux neuronaux avec un ou plusieurs paramètres pouvant être appris ; et
l'agrégation des un ou plusieurs modèles locaux sur la base d'un calcul multipartite (MPC) pour obtenir un ou plusieurs modèles globaux, et dans lequel la pluralité de clients (202A à 202N) considèrent un ou plusieurs modèles locaux correspondants comme une entrée privée d'une fonction pour obtenir les un ou plusieurs modèles globaux, et dans lequel l'agrégation des un ou plusieurs modèles locaux, comprend :

i) la transformation d'au moins un modèle local à partir des un ou plusieurs modèles locaux correspondant à chaque client en un vecteur dimensionnel localement, dans lequel une ou plusieurs couches individuelles de poids et de biais sont extraites et concaténées ;
ii) la réduction d'un vecteur dimensionnel de chaque modèle local par une technique de réduction de dimensionnalité basée sur MPC pour obtenir un ou plusieurs vecteurs de modèle à dimension réduite, et dans lequel un nombre de composantes principales obtenus est le même qu'un nombre de clients participants ;

iii) la création d'au moins une part locale des un ou plusieurs vecteurs de modèle à dimension réduite et distribués à travers la pluralité de clients (202A à 202N) sur la base du MPC, et dans lequel chaque client reçoit une partie de données associées à d'autres clients ;

iv) la détermination d'un score de silhouette sur la base du MPC en regroupant les un ou plusieurs vecteurs de modèle à dimension réduite en au moins l'un parmi : (a) un groupe minoritaire, ou (b) un groupe majoritaire, dans lequel le score de silhouette est déterminé, comprend : (a) le calcul d'un coefficient de silhouette ($S_i$) pour chaque point (i) dans un groupe sur la base (i) d'une distance inter-groupe moyenne ($b_i$), et (ii) d'une distance intra-groupe moyenne ($a_i$) ; et (b) la détermination du score de silhouette par une moyenne du coefficient de silhouette ($S_i$) ;

v) la transformation du score de silhouette en une probabilité d'epsilon (E), comprend : (a) la sélection d'un premier hyperparamètre (p) et d'un second hyperparamètre (q) par la pluralité de clients (202A à 202N) sur la base des un ou plusieurs protocoles ; (b) le réglage d'une ou plusieurs entrées et cibles pour une optimisation en tant que x et y ; (c) l'initialisation d'un premier paramètre de transformation, et d'un second paramètre de transformation d'une manière aléatoire, et dans lequel le premier paramètre de transformation correspond à un poids (W), et le second paramètre de transformation correspond à un biais (b) ; (d) l'optimisation du premier paramètre de transformation (W), et du second paramètre de transformation (b) pour obtenir une valeur vraie du premier paramètre de transformation (W), et du second paramètre de transformation (b), à partir du premier hyperparamètre (p) et du second hyperparamètre (q), et dans lequel la valeur vraie du premier paramètre de transformation (W), et du second paramètre de transformation (b), sont précalculées pendant l'initialisation des un ou plusieurs protocoles ; et (e) la transformation du score de silhouette en la probabilité d'epsilon (E) par application d'une fonction sigmoïde d'un multiple du premier paramètre de transformation (W), et d'une somme du second paramètre de transformation (b) ;

vi) la sélection d'au moins l'un parmi (a) un groupe le plus grand, ou (b) un ensemble entier de modèles en tant qu'ensemble actif, sur la base de la probabilité d'epsilon (E) ; et

vii) la sélection d'un $r^e$ modèle à partir de l'ensemble actif à attribuer en tant que modèle global, comprend : (a) la sélection d'un ou plusieurs entiers uniformes aléatoires privés entre 0 et n-1 par chaque client dans l'ensemble actif, dans lequel « n » est un nombre de modèles dans l'ensemble actif ; (b) l'ajout de l'entier uniforme aléatoire privé sur la base du MPC, dans lequel la somme des un ou plusieurs entiers uniformes aléatoires privés sélectionnés est divisée par le « n » pour obtenir le reste (r) ; et (c) l'attribution du $r^e$ modèle en tant que modèle global pour un prochain tour fédéré.

4. Système (100) selon la revendication 3, dans lequel les un ou plusieurs processeurs matériels (102) sont configurés par les instructions pour sélectionner l'ensemble actif sur la base de la probabilité d'epsilon (E), comprend :

(a) la sélection d'un ou plusieurs nombres entiers par chaque client d'une manière aléatoire, et sont ajoutés au MPC, et dans lequel le nombre entier sélectionné est privé pour chaque client ;
(b) la division de la somme des un ou plusieurs nombres entiers sélectionnés par un multiple entier positif non nul de dix pour obtenir un reste (r) sur la base du MPC et partagé avec chaque client ;
(c) la division du reste (r) est à nouveau divisé par le multiple entier positif non nul de dix pour obtenir un nombre aléatoire qui est partagé avec chaque client ; et
(d) la sélection du groupe majoritaire en tant qu'ensemble actif si le nombre aléatoire sélectionné est inférieur à la probabilité d'epsilon (E), ou sinon l'ensemble entier de modèles est sélectionné en tant qu'ensemble actif.

5. Un ou plusieurs supports de stockage d'informations lisibles par machine non transitoires comprenant une ou plusieurs instructions qui, lorsqu'elles sont exécutées par un ou plusieurs processeurs matériels, amènent :

l'initialisation d'un ou plusieurs protocoles correspondant à une pluralité de clients (202A à 202N) pour obtenir une ou plusieurs informations publiques, et dans lequel les une ou plusieurs informations publiques correspondent à : (a) une architecture d'au moins un modèle, (b) un schéma de données, (c) une taille de lot, (d) un nombre d'époques locales, (e) un critère de convergence, (f) un ou plusieurs protocoles associés au calcul multipartite (MPC), (g) une ou plusieurs bibliothèques, et (h) une connectivité ; et
la réalisation itérative sur la base des un ou plusieurs protocoles, comprend :

l'entraînement d'au moins un modèle local associé à chaque client, dans lequel chaque modèle local correspond à une copie d'un modèle global, et dans lequel les un ou plusieurs modèles locaux correspondent à au moins un modèle paramétrique allant d'une régression logistique à un ou plusieurs grands réseaux neuronaux avec un ou plusieurs paramètres pouvant être appris ; et

l'agrégation des un ou plusieurs modèles locaux sur la base d'un calcul multipartite (MPC) pour obtenir un ou plusieurs modèles globaux, et dans lequel la pluralité de clients (202A à 202N) considèrent un ou plusieurs modèles locaux correspondants comme une entrée privée d'une fonction pour obtenir les un ou plusieurs modèles globaux, et dans lequel l'agrégation des un ou plusieurs modèles locaux, comprend :

i) la transformation d'au moins un modèle local à partir des un ou plusieurs modèles locaux correspondant à chaque client en un vecteur dimensionnel localement, dans lequel une ou plusieurs couches individuelles de poids et de biais sont extraites et concaténées ;

ii) la réduction d'un vecteur dimensionnel de chaque modèle local par une technique de réduction de dimensionnalité basée sur MPC pour obtenir un ou plusieurs vecteurs de modèle à dimension réduite, et dans lequel un nombre de composantes principales obtenus est le même qu'un nombre de clients participants ;

iii) la création d'au moins une part locale des un ou plusieurs vecteurs de modèle à dimension réduite et distribués à travers la pluralité de clients (202A à 202N) sur la base du MPC, et dans lequel chaque client reçoit une partie de données associées à d'autres clients ;

iv) la détermination d'un score de silhouette sur la base du MPC en regroupant les un ou plusieurs vecteurs de modèle à dimension réduite en au moins l'un parmi : (a) un groupe minoritaire, ou (b) un groupe majoritaire, dans lequel le score de silhouette est déterminé, comprend : (a) le calcul d'un coefficient de silhouette $(S_i)$ pour chaque point (i) dans un groupe sur la base (i) d'une distance inter-groupe moyenne $(b_i)$, et (ii) d'une distance intra-groupe moyenne $(a_i)$ ; et (b) la détermination du score de silhouette par une moyenne du coefficient de silhouette $(S_i)$ ;

v) la transformation du score de silhouette en une probabilité d'epsilon (E), comprend : (a) la sélection d'un premier hyperparamètre (p) et d'un second hyperparamètre (q) par la pluralité de clients (202A à 202N) sur la base des un ou plusieurs protocoles ; (b) le réglage d'une ou plusieurs entrées et cibles pour une optimisation en tant que x et y ; (c) l'initialisation d'un premier paramètre de transformation, et d'un second paramètre de transformation d'une manière aléatoire, et dans lequel le premier paramètre de transformation correspond à un poids (W), et le second paramètre de transformation correspond à un biais (b) ; (d) l'optimisation du premier paramètre de transformation (W), et du second paramètre de transformation (b) pour obtenir une valeur vraie du premier paramètre de transformation (W), et du second paramètre de transformation (b), à partir du premier hyperparamètre (p) et du second hyperparamètre (q), et dans lequel la valeur vraie du premier paramètre de transformation (W), et du second paramètre de transformation (b), sont précalculées pendant l'initialisation des un ou plusieurs protocoles ; et (e) la transformation du score de silhouette en la probabilité d'epsilon (E) par application d'une fonction sigmoïde d'un multiple du premier paramètre de transformation (W), et d'une somme du second paramètre de transformation (b) ;

vi) la sélection d'au moins l'un parmi (a) un groupe le plus grand, ou (b) un ensemble entier de modèles en tant qu'ensemble actif, sur la base de la probabilité d'epsilon (E) ; et

vii) la sélection d'un $r^e$ modèle à partir de l'ensemble actif à attribuer en tant que modèle global, comprend : (a) la sélection d'un ou plusieurs nombres entiers aléatoires privés entre 0 et n-1 par chaque client dans l'ensemble actif, dans lequel « n » est un nombre de modèles dans l'ensemble actif ; (b) l'ajout de l'entier uniforme aléatoire privé sur la base du MPC, dans lequel la somme des un ou plusieurs entiers uniformes aléatoires privés sélectionnés est divisée par le « n » pour obtenir le reste (r) ; et (c) l'attribution du $r^e$ modèle en tant que modèle global pour un prochain tour fédéré.

6. Un ou plusieurs supports de stockage d'informations lisibles par machine non transitoires selon la revendication 5, dans lesquels l'ensemble actif est sélectionné sur la base de la probabilité d'epsilon (E), comprend :

(a) la sélection d'un ou plusieurs nombres entiers privés par chaque client d'une manière aléatoire, et sont ajoutés au MPC, et dans lequel le nombre entier sélectionné est privé pour chaque client ;

(b) la division de la somme des un ou plusieurs nombres entiers sélectionnés par un multiple entier positif non nul de dix pour obtenir un reste (r) sur la base du MPC et partagé avec chaque client ;

(c) la division du reste (r) est à nouveau divisé par le multiple entier positif non nul de dix pour obtenir un nombre aléatoire qui est partagé avec chaque client ; et

(d) la sélection du groupe majoritaire en tant qu'ensemble actif si le nombre aléatoire sélectionné est inférieur à la probabilité d'epsilon (E), ou sinon l'ensemble entier de modèles est sélectionné en tant qu'ensemble actif.

FIG. 1

PROTOCOLS INITIALIZATION UNIT <u>204</u>

MODEL TRAINING UNIT <u>206</u>

MODEL AGGREGATION UNIT <u>208</u>

GLOBAL MODEL SELECTION UNIT <u>208A</u>

$R_1$

202A

**FIG. 2A**

**FIG. 2B**

M₁ R₁ 1 M₂ R₂ 2 R₄ 4 M₄ R₃ 3 M₃ 200

**FIG. 2C**

initializing, via one or more hardware processors, one or more protocols corresponding to a plurality of clients to obtain one or more public information 302

iteratively performing, via the one or more hardware processors, based on one or more protocols 304, comprises:

> training, via the one or more hardware processors, at least one local model associated with each client, wherein each local model correspond to a copy of a global model 304A

> aggregating, via the one or more hardware processors, the one or more local models based on a multi-party computation (MPC) to obtain one or more global models 304B

> wherein the aggregation of the one or more local models 304B, comprises:

>> transforming, via the one or more hardware processors, at least one local model from the one or more local models corresponding to each client to one dimensional vector locally 304B-1

A

300

**FIG. 3A**

(A)

reducing, via the one or more hardware processors, one dimensional vector of each local model by a MPC based dimensionality reduction technique to obtain one or more dimension-reduced model vectors 304B-2

creating, via the one or more hardware processors, at least one local share of the one or more dimension-reduced model vectors and distributed across the plurality of clients based on the MPC 304B-3

determining, via the one or more hardware processors, a silhouette score based on the MPC by clustering the one or more dimension-reduced model vectors into at least one of: (a) a minority cluster, or (b) a majority cluster 304B-4

transforming, via the one or more hardware processors, the silhouette score into an epsilon probability (E) 304B-5

selecting, via the one or more hardware processors, at least one of (a) a largest cluster, or (b) an entire set of a model as an active set, based on the epsilon probability (E) 304B-6

selecting, via the one or more hardware processors, a $r^{th}$ model from the active set to assign as the global model 304B-7

300

**FIG. 3B**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421002614

**Non-patent literature cited in the description**

- **SONG ZHIHAO et al.** *Dual-Model Active 1-15 INV. Federated Learning Based on Homomorphic G06N3/045 Encryption*
- **SATTLER FELIX et al.** *Clustered Federated 1-15 Learning: Model-Agnostic Distributed Multitask Optimization Under Privacy Constraints*
- **ANNA BOGDANOVA et al.** *Federated Learning 1-15 System without Model Sharing through Integration of Dimensional Reduced Data Representations*